# EUROPÄISCHE PATENTSCHRIFT

(11) **EP 0 685 338 B1**
(45) Veröffentlichungstag und Bekanntmachung des Hinweises auf die Patenterteilung: **09.07.1997**
(21) Anmeldenummer: 95106786.7
(22) Anmeldetag: 05.05.1995
(51) Int. Cl.: B41F 33/00

(54) **Sicherheitseinrichtung für eine Druckmaschine**
Safety device for a printing machine
Dispositif de sécurité pour une machine d'impression

(30) Priorität: 31.05.1994 DE 4418998
(43) Veröffentlichungstag der Anmeldung: 06.12.1995
(73) Patentinhaber: MAN Roland Druckmaschinen AG, 63075 Offenbach (DE)
(72) Erfinder: Schwinn, Klaus, D-63150 Heusenstamm (DE); Lindner, Bernd, D-63150 Heusenstamm (DE); Bischof, Reinhold, D-63128 Dietzenbach (DE); Götz, Heinz, D-63755 Alzenau (DE); Deschamps, Joachim, D-63543 Neuberg 1 (DE)
(74) Vertreter: Marek, Joachim, Dipl.-Ing.

(56) Entgegenhaltungen:
- NL-C- 40 053
- US-A- 1 588 087
- US-A- 5 264 834

## Beschreibung

Die Erfindung betrifft eine Sicherheitseinrichtung für eine Druckmaschine gemäß dem Oberbegriff von Anspruch 1.

Bei Druckmaschinen und insbesondere bei Bogenoffsetdruckmaschinen ist es üblich und auf Grund von Sicherheitsbestimmungen auch nötig, daß vor dem Anlaufen der Druckmaschine ein akustisches Warnsignal abgegeben wird. Nachdem über ein Befehlstaster ein bestimmtes Anlaufkommando eingegeben wurde (Tippen, Schleichgang, Hochfahren auf Grund- oder Produktionsdrehzahl usw.) ertönt für beispielsweise drei Sekunden ein Warnton. Nach Abgabe dieses Warntons muß dann innerhalb einer bestimmten Zeit, z.B. zehn Sekunden, die Befehlseingabe noch einmal wiederholt werden. Erst dann schaltet die Steuerung der Druckmaschine den Antrieb zum Anlaufen. Eine akustische Anlauf-Warneinrichtung für Druck- und Papierverarbeitungsmaschinen ist beispielsweise in der DIN 8738, November 1990, beschrieben.

Nachteilig bei den bekannt gewordenen Anlauf-Warneinrichtungen ist, daß durch Defekte in den Signalgebern bzw. in der vorgeschalteten Ansteuerelektronik es möglich ist, daß das Warnsignal vor dem Anlaufen der Druckmaschine nicht abgegeben wird. Dies stellt insbesondere dann eine Personengefährdung dar, wenn die Druckmaschine bei geöffneten Schutzen beispielsweise im Tippbetrieb gefahren werden soll.

Aus der US-A-5 264 834 ist eine Warneinrichtung für eine elektrisch betriebene Maschine bekannt, durch welche gewährleistet sein soll, daß die Maschine nur dann auf Befehlkommandos reagiert bzw. diese ausführt, wenn ein Benutzer zuvor Bedienungs- bzw. Warnhinweise vernommen hat. Demzufolge ist ein Tonerzeuger vorgesehen, vermittels dem gespeicherte Warnhinweise akustisch abgegeben werden und der Benutzer während der Abgabe der Hinweise in den vorgegebene Hinweisen enthaltene Tastenkombinationen auszuführen hat, was bei Übereinstimmung mit der Vorgabe als Indiz dafür zählt, ob der Benutzer während der Abgabe der Bedien- und Warnhinweise zugegen war bzw. diese - und Warnhinweise auch vernommen hat.

Aus der NL-C-40 053 ist eine Verschaltung eines akustischen Signalgebers in Form einer Hupe oder dgl. bekannt, bei welcher die Signalabgabe in Abhängigkeit von Bedienvorgängen bzw. dem Betätigen bestimmter Befehlstaster ausgelöst wird.

Aufgabe der vorliegenden Erfindung ist es daher, den oben beschriebenen Nachteil zu vermeiden.

Gelöst wird diese Aufgabe durch die kennzeichnenden Merkmale von Anspruch 1. Weiterbildungen der Erfindung ergeben sich aus den Unteransprüchen.

Nach der Erfindung ist vorgesehen, daß eine Überwachungseinrichtung vorgesehen ist, welche die Abgabe des akustischen Warnsignales eines oder mehrerer an der Druckmaschine angebrachter Tonerzeuger erfaßt und derartig mit der Steuerung und/oder dem Antrieb der Druckmaschine in Verbindung steht, so daß bei Nichtabgabe des akustischen Warnsignales ein Anlaufen der Druckmaschine verhindert wird. Dies kann beispielsweise dadurch erfolgen, daß der Stromrichter des Antriebes über einem Hauptschütz vom Netz getrennt wird. Auch ist es möglich, den Feldstrom über ein Feldschütz abzuschalten.

Nach einer Weiterbildung der Erfindung kann vorgesehen sein, daß die Überwachungseinrichtung den Antrieb bzgl. seines Bewegungszustandes überwacht, d.h. also feststellt, ob die Druckmaschine eine Bewegung ausführt oder nicht. Dies kann in einfacher Weise dadurch bewerkstelligt sein, daß die Überwachungseinrichtung mit dem Tachogenerator der Druckmaschine in Wirkverbindung steht. Stellt die Überwachungseinrichtung nun nach Eingabe eines Anlaufkommandos eine von Null abweichende Drehzahl des Antriebes fest, obwohl kein akustisches Warnsignal abgegeben wurde, so wird auch hier der Antrieb sofort gestoppt und insbesondere eine elektrisch betätigbare Bremse eingelegt.

Zur Erfassung der Abgabe des akustischen Warnsignales kann gemäß einer einfachen Ausführung der Erfindung vorgesehen sein, daß wenigstens einem Tonerzeuger (Hupe, piezo-elektrischer Signalgeber) ein Mikrofon zugeordnet ist, welches mit der Überwachungseinrichtung verbunden ist. Im störungsfreien Zustand erhält somit die Überwachungseinrichtung ein elektrisches Signal in Form einer Wechselspannung, wenn das akustische Warnsignal ordnungsgemäß abgegeben wird.

Gemäß einer Weiterbildung der Erfindung kann vorgesehen sein, daß der Eingang wenigstens eines Tonerzeugers mit der Überwachungseinrichtung verbunden ist. Durch die Überwachungseinrichtung ist somit feststellbar, ob der Tonerzeuger mit der für die Abgabe des akustischen Warnsignals vorgesehenen Spannung (Wechselspannung) angesteuert wird. In einfacher Weise läßt sich dies durch eine UND-Verknüpfung eines Einganges des Signalgenerators zur Erzeugung des entsprechenden Spannungsverlaufes für den Tonerzeuger sowie eines Ausgangssignales des Signalgenerators bewerkstelligen.

Eine besonders vorteilhafte Gestaltung der Erfindung ergibt sich, wenn der oder die Tonerzeuger in an sich bekannter weise als piezo-elektrische Signalgeber ausgebildet sind. Bei einem derartigen piezo-elektrischen Signalgeber muß lediglich eine dritte Elektrode angebracht werden, so daß beim ordnungsgemäßen Schwingen des piezo-keramischen Materials auf Grund des mechanischen Spannungszustandes eine entsprechende elektrische Spannung abgreifbar ist. Ausgenutzt wird hier, daß es sich beim piezo-elektrischen Effekt um einen umkehrbaren Vorgang handelt.

Des weiteren erfolgt die Erläuterung eines Ausführungsbeispiels der Erfindung anhand der Zeichnung.

Es zeigt:
- Fig. 1: das Schaltprinzip der erfindungsgemäßen Sicherheitseinrichtung,
- Fig. 2: eine Schaltung zur Überwachung der ordnungsgemäßen Ansteuerung eines Tonerzeugers, und
- Fig. 3: ein piezo-elektrischen Signalgeber mit zusätzlicher Abfrage-Elektrode.

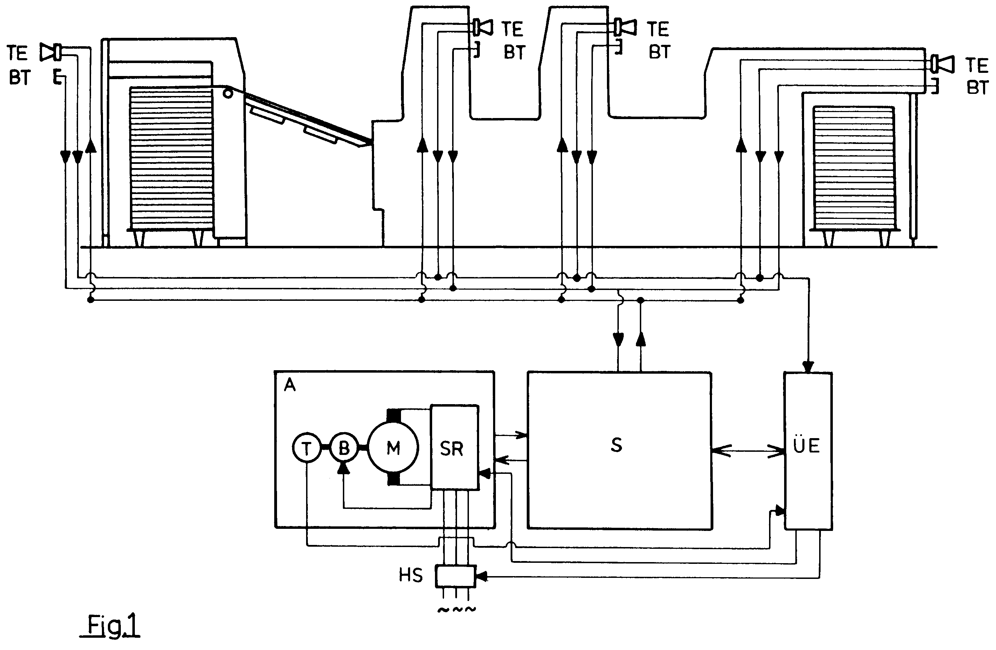

Fig. 1 zeigt prinzipiell eine Bogenoffsetdruckmaschine mit zwei Druckwerken, einem Anleger sowie einem Ausleger. Am Anleger, den Druckwerken sowie dem Ausleger sind jeweils Bedientaster BT angebracht, durch welche Anlaufkommandos für die Druckmaschine eingebbar sind. Unter Anlaufkommandos seien hier diejenigen Kommandos verstanden, welche ein Hochlaufen der Druckmaschine aus dem Stillstand bewirken. Dies sind z.B. das Hochfahren der Maschine auf Produktionsdrehzahl, Schleichgang oder der Tippbetrieb.

Die Bedientaster BT - Fig. 1 zeigt an jedem Aggregat jeweils nur ein Bedientaster BT - sind über ein Bussystem an eine Steuerung S der Druckmaschine gekoppelt. Die Steuerung S steht mit dem Antrieb A der Druckmaschine in Wirkverbindung, wobei der Antrieb A einen fremderregten Gleichstrommotor M mit netzgeführten Stromrichter SR, einen Tachogenerator T sowie eine elektromagnetisch betätigbare Bremse B aufweist.

Die Steuerung S der Druckmaschine steht über ein weiteres Leitungssystem mit Tonerzeugern TE in Wirkverbindung. Gemäß Fig. 1 ist dabei jedem Feld von Bedientastern BT ein Tonerzeuger TE zugeordnet. Die Druckmaschine kann aber auch einen zentralen Tonerzeuger TE aufweisen. Zwischen der Steuerung S und den Tonerzeugers TE ist ein in Fig. 1 nicht dargestellter Signalgenerator geschaltet.

Das Zusammenwirken der Steuerung S mit dem Antrieb A sowie den Bedientastern BT nebst den Tonerzeugern TE ist dabei dergestalt, daß nach Eingabe eines Anlaufkommandos über einen Bedientaster BT zunächst über sämtliche Tonerzeuger TE ein akustisches Warnsignal abgegeben wird, woraufhin die Kommandoeingabe über den Bedientaster BT noch einmal wiederholt werden muß. Dies hat innerhalb der sogenannten Freigabezeit zu geschehen. Ist dies der Fall, so bewirkt die Steuerung S über den Antrieb A das Anlaufen der Druckmaschine.

In Fig. 1 ist dargestellt, daß sämtliche Tonerzeuger TE über ein weiteres Leitungssystem mit einer Überwachungseinrichtung ÜE verbunden sind. Durch dieses Leitungssystem kann durch die als Rechner ausgebildete Überwachungseinrichtung ÜE festgestellt werden, ob die Abgabe eines akustischen Warnsignales erfolgt. In einer einfachen Ausgestaltung kann dabei jedem Tonerzeuger TE ein nicht dargestelltes Mikrofon zugeordnet sein. Alternativ dazu kann auch vorgesehen sein, die Eingänge zum Betrieb der Tonerzeuger TE über dieses Leitungssystem an die Überwachungseinrichtung ÜE zu schalten. Somit ist durch die Überwachungsschaltung ÜE feststellbar, ob die Tonerzeuger TE zur Abgabe eines akustischen Warnsignales entsprechend angesteuert werden.

Ist durch die obenstehend kurz angedeutete und noch weiter unten genauer zu erläuternden Methoden seitens der Überwachungseinrichtung ÜE festgestellt worden, daß über die Tonerzeuger TE das akustische Warnsignal ordnungsgemäß abgegeben worden ist, so erfolgt über die Steuerung S nach wiederholter Kommandoeingabe die entsprechende Ansteuerung des Antriebes A. Stellt die Überwachungseinrichtung ÜE fest, daß das akustische Warnsignal nicht abgegeben worden ist, so kann die Überwachungseinrichtung ÜE beispielsweise über die Steuerung S durch entsprechende Signalabgabe ein Anlaufen der Druckmaschine verhindern. Die Überwachungseinrichtung ist dabei bevorzugt direkt an das Hauptschütz HS oder ein nicht dargestelltes Feldschütz des Antriebes A bzw. des netzgeführten Stromrichters SR geschaltet. Bei Nichtabgabe eines ordnungsgemäßen Warnsignales wird dazu der Antrieb A stromlos geschaltet.

Gemäß einer Weiterbildung der Erfindung erfaßt die Überwachungseinrichtung ÜE auch den Bewegungszustand des Antriebes A, was beispielsweise durch Abgreifen des Signals des Tachogenerators T erfolgen kann. Alternativ dazu wäre auch der Abgriff der Ankerspannung des Gleichstrommotors M möglich.

Stellt die Überwachungseinrichtung ÜE ein Anlaufen des Antriebes, d.h. eine vom Stillstand abweichenden Bewegungszustand der Druckmaschine fest, obwohl das akustische Warnsignal nicht abgegeben worden ist, so erfolgt auch hier ein Stillsetzen der Druckmaschine über den Antrieb A. Auch dies kann durch Betätigen des Hauptschützes HS, eines Feldschützes oder durch Schalten der Regelsperre des Stromrichters SR erfolgen. Zusätzlich kann auch die Bremse B eingelegt werden.

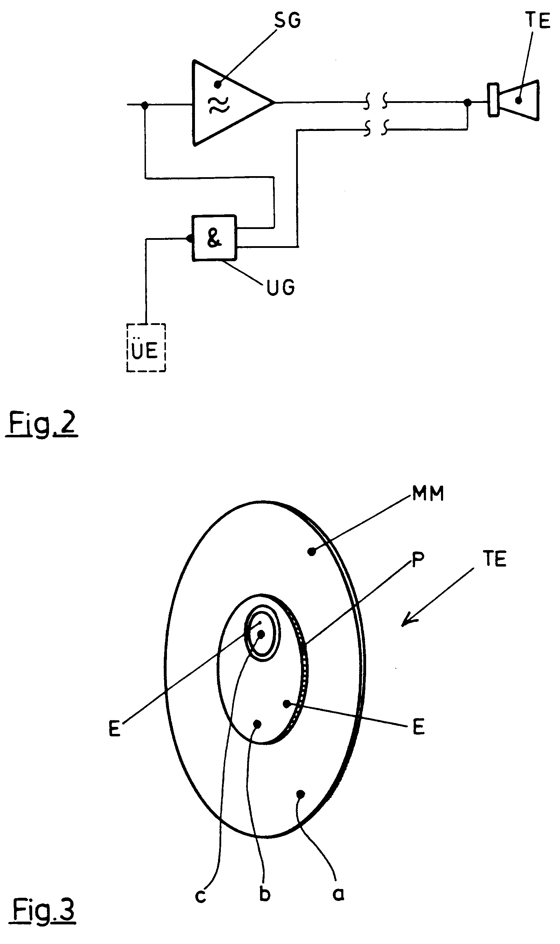

Fig. 2 zeigt eine einfache Ausgestaltung der Erfindung zur Überwachung der in Fig. 1 dargestellten Tonerzeuger TE. Hiernach wird festgestellt, ob der oder die Tonerzeuger TE zur Abgabe des akustischen Warnsignales ordnungsgemäß angesteuert werden. Mit SG ist hier der Signalgenerator zur Ansteuerung der Tonerzeuger TE bezeichnet. Die Eingänge eines UND-Gliedes UG sind dazu mit dem Eingangs- als auch mit dem Ausgangssignal des Signalgenerators SG verbunden, so daß bei ordnungsgemäßem Betrieb des Signalgenerators SG am Ausgang des UND-Gliedes UG der Überwachungseinrichtung ÜE ein entsprechendes Signal zuleitbar ist. Der Signalgenerator SG ist dazu derartig ausgestaltet, daß an dessen Ausgang eine zum Betrieb der Tonerzeuger TE entsprechende Wechselspannung bereitgestellt wird, wenn an dessen Eingang ein Signal anliegt. Der in Fig. 2 dargestellte direkte Abgriff des Ausgangssignals der Signalgenerators SG ist dabei nur prinzipiell, denn vorzugsweise ist vorgesehen, das vom Signalgenerator SG den Tonerzeuger TE zugeleitete Signal direkt am Tonerzeuger TE abzugreifen und entsprechend über ein Leitungssystem zurückzuführen.

Fig. 3 zeigt eine bevorzugte Ausgestaltung der Erfindung, bei der die Tonerzeuger TE als piezo-elektrische Signalgeber ausgebildet sind. Der gezeigte piezo-elektrische Tonerzeuger TE besteht hierbei aus einer Metallmembrane MM sowie einem darauf angebrachten Plättchen P aus piezo-keramischen Material in Form einer dünnen Schicht. Auf der der Metallmembran MM abgewandten Seite des Plättchens P ist in Form eines metallischen Überzuges eine Elektrode E angebracht.

Die Metallmembrane MM sowie die Elektrode E sind mit zwei Drähten a, b verbunden. Wird nun über die Leitung a, b beidseitig an das piezo-keramische Plättchen P eine Wechselspannung angelegt, so wird die Platte P nebst der Metallmembran MM in an sich bekannter Weise in mechanische Schwingungen versetzt, wobei die Metallmembran MM als schallabstrahlende Fläche (Lautsprechermembran) wirkt.

Auf der der Metallmembran MM abgewandten Seite der piezo-keramischen Platte P ist elektrischisoliert gegenüber der Elektrode E eine weitere Elektrode E' angebracht, die mit einer weiteren Leitung c verbunden ist. Diese zusätzliche Elektrode E' ist dabei beispielsweise durch eine kreisförmige Ritzung (Unterbrechung) der metallischen Schicht der Elektrode E entstanden. Über die Leitung c ist nun während des Betriebes dieses Tonerzeugers TE - Wechselspannung zwischen den Leitungen a und b - gegenüber der Metallmembran MM ebenfalls eine Wechselspannung abgreifbar. Über die Leitung c kann diese Wechselspannung zur Feststellung der Abgabe des Warnsignals der Überwachungseinrichtung ÜE zugeführt werden.

### Bezugszeichenliste

- TE: Tonerzeuger
- BT: Befehlstaster
- S: Steuerung
- A: Antrieb
- ÜE: Überwachungseinrichtung
- SR: Stromrichter
- M: Gleichstrommotor
- B: Bremse
- T: Tachogenerator
- HS: Hauptschütz
- SG: Signalgenerator
- UG: UND-Glied
- MM: Metallmembran
- P: Platte (piezo-keramisch)
- E,E': Elektrode

## Patentansprüche

1. Druckmaschine mit einem Antrieb (A) und einer Sicherheitseinrichtung, welche eine dem Antrieb (A) vorgeordneten Steuerung (S), mit der Steuerung (S) verbundene Befehlstastern (BT) zur Einleitung von Maschinenlaufkommandos sowie Tonerzeugern (TE) zur Abgabe eines akustischen Warnsignals aufweist, wobei durch die Steuerung (S) ein Anlaufen der Druckmaschine durch Betätigung eines Befehlstasters (BT), anschließender Abgabe eines akustischen Warnsignales über die Tonerzeuger (TE) sowie nachfolgender nochmaliger Betätigung des gleichen Befehlstasters (BT) auslösbar ist,
**dadurch gekennzeichnet**,
daß eine Überwachungseinrichtung (ÜE) vorgesehen ist, welche mit dem Antrieb (A) der Druckmaschine in Wirkverbindung steht, daß der Überwachungseinrichtung (ÜE) ein Signal wenigstens eines der Tonerzeuger (TE) zuführbar ist, und daß ein Sperren des Antriebs (A) gegen Anlaufen erfolgt, wenn die Überwachungseinrichtung(ÜE) kein Signal empfängt.

2. Druckmaschine nach Anspruch 1,
**dadurch gekennzeichnet**,
daß die Überwachungseinrichtung (ÜE) direkt mit dem Ausgang eines Signalerzeugers verbunden ist, an dem die Tonerzeuger (TE) geschaltet sind.

3. Druckmaschine nach Anspruch 1,
**dadurch gekennzeichnet**,
daß die Überwachungseinrichtung (ÜE) über ein Mikrophon mit wenigstens einem der Tonerzeuger (TE) verbunden ist.

4. Druckmaschine nach den Ansprüchen 1 oder 2,
**dadurch gekennzeichnet**,
daß die Überwachungseinrichtung (ÜE) mit dem Ausgang eines Und-Gliedes (UG) verbunden ist, dessen Eingänge mit einem Eingang den oder die Tonerzeuger (DE) ansteuernden Signalgenerators (SG) verbunden sind und dessen weitere Eingänge mit den Ausgängen des Signalgenerators (SG) verbunden sind, an welchen die Tonerzeuger (TE) geschaltet sind.

5. Druckmaschine nach Anspruch 1,
**dadurch gekennzeichnet**,
daß die Tonerzeuger als piezo-elektrische Signalgeber ausgebildet sind, welche neben zwei Elektroden (MM, E) eine weitere elektrisch gegenüber diesen isolierte Elektrode (E') aufweist, welche mit der Überwachungseinrichtung (ÜE) verbunden ist.

6. Druckmaschine nach einem der Ansprüche 1 bis 5,
**dadurch gekennzeichnet**,
daß die Überwachungseinrichtung (ÜE) mit dem Hauptschütz (HS) des Antriebes (A) zum Abschalten des Antriebes (A) verbunden ist.

7. Druckmaschine nach einem der Ansprüche 1 bis 5,
**dadurch gekennzeichnet**,
daß die Überwachungseinrichtung (ÜE) mit einem netzgeführten Stromrichter (SR) des Antriebes (A) zum Auslösen einer Reglersperre verbunden ist.

8. Druckmaschine nach einem der vorhergehenden Ansprüche,
**dadurch gekennzeichnet**,
daß die Überwachungseinrichtung (ÜE) in Wirkverbindung mit einer elektromagnetischen Bremse (B) des Antriebes (A) verbunden ist.

9. Druckmaschine nach einem der vorhergehenden Ansprüche,
**dadurch gekennzeichnet**,
daß durch die Überwachungseinrichtung (ÜE) zusätzlich eine vom Antrieb (A) ausgeführte Bewegung feststellbar und ein Stillsetzen des Antriebes (A) auslösbar ist, wenn der Antrieb (A) eine Bewegung ohne vorherige Abgabe des Warnsignales ausführt.

10. Druckmaschine nach Anspruch 9,
**dadurch gekennzeichnet**,
daß zur Feststellung einer vom Antrieb (A) ausgeführten Bewegung der Überwachungseinrichtung (ÜE) die Ankerspannung und/oder das Signal eines Tachogenerators (T) zuführbar ist.

## Claims

1. Printing press with a drive (A) and a safety device which has a control (S) connected prior to the drive (A), command buttons (BT) connected to the control (S) for introducing press running commands as well as tone generators (TE) for emitting an acoustic warning signal, wherein by the control (S), running of the printing press is releasable by actuation of a command button (BT) to provide subsequent emission of an acoustic warning signal via the tone generators (TE) as well as successive subsequent actuation of the same command button, characterised in that a monitoring device (ÜE) is provided which is in operative connection with the drive (A) of the printing press, that a signal of at least one of the tone generators (TE) can be fed to the monitoring device (ÜE) and that a locking of the drive (A) against running takes place if the monitoring device (ÜE) receives no signal.

2. Printing press according to Claim 1, characterised in that the monitoring device (ÜE) is connected directly with the output of a signal generator to which the tone generators (TE) are connected.

3. Printing press according to Claim 1, characterised in that the monitoring device (ÜE) is connected via a microphone with at least one of the tone generators (TE).

4. Printing press according to Claim 1 or 2, characterised in that the monitoring device (ÜE) is connected with the output of an AND circuit (UG), the inputs of which are connected with one input of the signal generator (SG) controlling the tone generator(s) (DE), and the further inputs with the outputs of the signal generator (SG) to which the tone generators (TE) are connected.

5. Printing press according to Claim 1, characterised in that the tone generators are constructed as piezo-electric signal emitters which, as well as two electrodes (MM, E), have a further electrode (E') electrically insulated with respect to this, which is connected with the monitoring device (ÜE).

6. Printing press according to one of Claims 1 to 5, characterised in that the monitoring device (ÜE) is connected with the main protection (HS) of the drive (A) for switching off the drive (A).

7. Printing press according to one of Claims 1 to 5, characterised in that the monitoring device (ÜE) is connected with a line commuted power convertor (SR) of the drive (A) to trigger a control lock.

8. Printing press according to one of the preceding Claims, characterised in that the monitoring device (ÜE) is operatively connected with an electromagnetic brake (B) for the drive (A).

9. Printing press according to one of the preceding Claims, characterised in that via the monitoring device (DE), additionally a movement executed by the drive (A) can be determined and arresting of the drive (A) is triggered if the drive (A) carries out a movement without previous emission of the warning signal.

10. Printing press according to Claim 9, characterised in that to determine a movement carried out by the drive (A) the armature voltage and/or the signal of tacho generator (T) can be fed to the monitoring device (ÜE).

## Revendications

1. Machine d'impression comportant un entraînement (A) et un dispositif de sécurité comprenant une commande (S) agencée en amont de l'entraînement (A), des boutons-poussoirs d'ordre (BT) reliés à la commande (S) pour l'introduction d'ordres de fonctionnement de la machine, ainsi que des générateurs de son (TE) pour l'émission d'un signal d'avertissement acoustique, une mise en fonctionnement de la machine d'impression par l'actionnement d'un bouton-poussoir d'ordre (BT), une émission ultérieure d'un signal d'avertissement acoustique par l'intermédiaire du générateur de son (TE), ainsi qu'un nouvel actionnement ultérieur du même bouton-poussoir d'ordre (BT) pouvant être déclenchés par la commande (S),
caractérisée en ce que l'on prévoit un dispositif de surveillance (UE), en liaison active avec l'entraînement (A) de la machine d'impression, en ce qu'un signal d'au moins l'un des générateurs de son (TE) peut être amené au dispositif de surveillance (UE), et en ce qu'une fermeture de l'entraînement (A) à l'encontre de la mise en fonctionnement est réalisée lorsque le dispositif de surveillance (UE) ne reçoit aucun signal.

2. Machine d'impression selon la revendication 1,
caractérisée en ce que le dispositif de surveillance (UE) est relié directement à la sortie d'un générateur de signal, auquel sont reliés les générateurs de son (TE).

3. Machine d'impression selon la revendication 1,
caractérisée en ce que le dispositif de surveillance (UE) est relie, par l'intermédiaire d'un microphone, à au moins un générateur de son (TE).

4. Machine d'impression selon l'une des revendications 1 ou 2,
caractérisée en ce que le dispositif de surveillance (UE) est relié à la sortie d'une porte ET (UG), dont les entrées sont reliées à une entrée du ou des générateurs de signal (SG) déclenchant le générateur de son, et dont les autres entrées sont reliées aux sorties du générateur de signal (SG), auxquelles sont raccordés les générateurs de son (TE).

5. Machine d'impression selon la revendication 1,
caractérisée en ce que les générateurs de son sont réalisés sou forme de générateurs de signal piézo-électriques qui comprennent, en plus de deux électrodes (MM,E), une autre électrode (E') isolée électriquement par rapport à celles-ci et reliée au dispositif de surveillance (UE).

6. Machine d'impression selon l'une des revendications 1 à 5,
caractérisée en ce que le dispositif de surveillance (UE) est relié au contacteur principal (HS) de l'entraînement (A), pour mettre à l'arrêt l'entraînement (A).

7. Machine d'impression selon l'une des revendications 1 à 5,
caractérisée en ce que le dispositif de surveillance (UE) est relié à un convertisseur (SR) de l'entraînement (A), qui est commuté par le réseau, pour déclencher un arrêt du mécanisme de réglage.

8. Machine d'impression selon l'une des revendications précédentes,
caractérisée en ce que le dispositif de surveillance (UE) est en liaison active avec un frein électromagnétique (B) de l'entraînement (A).

9. Machine d'impression selon l'une des revendications précédentes,
caractérisée en ce que, par le dispositif de surveillance (UE), on peut détecter de plus un mouvement réalisé par l'entraînement (A) et on peut déclencher une mise à l'arrêt de l'entraînement (A), lorsque l'entraînement (A) réalise un mouvement sans émission antérieure du signal d'avertissement.

10. Machine d'impression selon la revendication 9,
caractérisée en ce que, pour déterminer un mouvement de l'entraînement (A), on fournit au dispositif de surveillance (UE) la tension induite et/ou le signal d'un générateur tachymétrique (T).
